(19) Europäisches Patentamt
European Patent Office
Office européen des brevets

(11) **EP 2 459 981 B1**

(12) **FASCICULE DE BREVET EUROPEEN**

(45) Date de publication et mention de la délivrance du brevet:
**12.03.2014 Bulletin 2014/11**

(21) Numéro de dépôt: **10752043.9**

(22) Date de dépôt: **19.07.2010**

(51) Int Cl.:
**G01M 17/02** (2006.01)   **G01N 33/42** (2006.01)

(86) Numéro de dépôt international:
**PCT/FR2010/051514**

(87) Numéro de publication internationale:
**WO 2011/015754 (10.02.2011 Gazette 2011/06)**

(54) **PROCEDE DE PREVISION D'UN EFFET PHYSIQUE D'INTERACTION ENTRE UN PNEUMATIQUE ET UN REVETEMENT ROUTIER**

VERFAHREN ZUR VORHERSAGE EINES PHYSIKALISCHEN WECHSELWIRKUNGSEFFEKTES ZWISCHEN EINEM REIFEN UND EINEM OBERFLÄCHENVERLAUF

METHOD FOR PREDICTING A PHYSICAL INTERACTION EFFECT BETWEEN A TIRE AND A SURFACE COURSE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **28.07.2009 FR 0955277**

(43) Date de publication de la demande:
**06.06.2012 Bulletin 2012/23**

(73) Titulaires:
  • **COMPAGNIE GENERALE DES ETABLISSEMENTS MICHELIN**
    **63000 Clermont-Ferrand (FR)**
  • **MICHELIN Recherche et Technique S.A.**
    **1763 Granges-Paccot (CH)**

(72) Inventeur: **ROCHOUX, Daniel**
    **F-36400 La Châtre (FR)**

(74) Mandataire: **de la Bigne, Guillaume Michel Marie et al**
    **LLR**
    **11 boulevard de Sébastopol**
    **75001 Paris (FR)**

(56) Documents cités:
**JP-A- 2007 230 458      US-A- 5 880 362**
**US-A1- 2006 136 151**

  • **HEINRICH G ET AL: "Rubber friction, tread deformation and tire traction" WEAR, ELSEVIER SEQUOIA, LAUSANNE, CH, vol. 265, no. 7-8, 20 septembre 2008 (2008-09-20), pages 1052-1060, XP022707229 ISSN: 0043-1648 [extrait le 2008-04-03]**
  • **CESBRON J ET AL: "Numerical and experimental study of multi-contact on an elastic half-space" INTERNATIONAL JOURNAL OF MECHANICAL SCIENCES, PERGAMON PRESS, OXFORD, GB, vol. 51, no. 1, 1 janvier 2009 (2009-01-01), pages 33-40, XP025898654 ISSN: 0020-7403 [extrait le 2008-11-27]**

**Description**

La présente invention concerne un procédé de prévision d'un effet physique d'interaction entre un pneumatique et un revêtement de chaussée. Elle s'applique, sans s'y restreindre, à la prévision du bruit de roulement du pneumatique sur le revêtement.

On connaît de l'état de la technique un procédé de modélisation du revêtement de chaussée. Dans ce procédé, on mesure un profil réel en trois dimensions du revêtement. Le profil réel comprend des indenteurs réels formés par des cailloux ou des gravillons incorporés dans une matrice, par exemple du goudron.

Afin de simplifier l'utilisation du profil réel acquis, on détermine des descripteurs géométriques réels des indenteurs réels comprenant, par exemple, une hauteur moyenne des indenteurs, une densité moyenne des indenteurs, etc...

On modélise chaque indenteur réel par un indenteur virtuel, par exemple une sphère, à partir des descripteurs réels. Les sphères sont décrites par des descripteurs virtuels, par exemple un nombre de sphères par unité de surface, un rayon de chaque sphère, une position de chaque sphère, etc... Les descripteurs virtuels permettent ainsi d'obtenir un profil virtuel dans lequel les indenteurs réels de grosse taille sont représentés par des sphères de grand rayon alors que les indenteurs réels de taille plus petite sont représentés par des sphères de rayon plus petit. Les descripteurs virtuels décrivent donc géométriquement les indenteurs virtuels qui, eux, modélisent les indenteurs réels. Les descripteurs virtuels sont donc des descripteurs géométriques simplifiés des indenteurs réels.

Toutefois, les descripteurs virtuels ainsi déterminés ne rendent pas compte de la réalité physique de l'interaction entre le revêtement et le pneumatique pour décrire un effet physique donné, par exemple, un bruit de roulement.

Il est alors nécessaire de corriger les descripteurs virtuels à l'aide de facteurs de correction dont on ignore la plupart du temps la signification physique. Par exemple, on calcule un descripteur PSI (sigle anglais pour Present Serviceability Index) ou encore un descripteur DI (sigle anglais pour Deterioration Index) décrivant de manière complexe une dégradation du revêtement. En outre, ces facteurs de correction ne permettent pas de prévoir de façon quantitative et précise l'effet physique étudié.

Un autre exemple de procédé est décrit par le document

HEINRICH Gert, WEAR 265 (2008) 1052-1060, 'Rubber friction, tread deformation and tire traction'.

L'invention a pour but de fournir un procédé de prévision permettant de décrire correctement l'interaction physique entre le pneumatique et le revêtement.

A cet effet, l'invention a pour objet un procédé de prévision d'au moins un effet physique d'interaction entre un pneumatique et un revêtement, caractérisé en ce que :

- on relève un profil réel du revêtement,
- on découpe le profil réel en plusieurs strates, chaque strate correspondant à une cote du profil réel,
- on détermine au moins une loi de variation d'au moins un descripteur du revêtement à partir du profil réel, en fonction de la cote du profil réel,
- on détermine, pour chaque loi de variation, une valeur, dite d'interaction, de chaque descripteur à une valeur, dite d'interaction, de la cote, et
- on prévoit une valeur de l'effet physique d'interaction à partir d'une valeur d'interaction d'au moins un descripteur.

Le procédé selon l'invention permet de décrire correctement l'interaction physique entre le pneumatique et le revêtement. En déterminant la loi de variation et en recherchant la valeur d'interaction de chaque descripteur, on peut ainsi décrire correctement l'effet physique d'interaction entre le revêtement et le pneumatique. Ainsi, chaque descripteur virtuel est un descripteur physique du revêtement et pas un simple descripteur géométrique de chaque indenteur réel contrairement au procédé de l'état de la technique. La valeur d'interaction de la cote correspond à la cote du profil pour laquelle l'écrasement du pneumatique à cette cote représente fidèlement l'écrasement réel du pneumatique sur le revêtement.

Selon une caractéristique optionnelle du procédé :

- le ou les descripteurs comprennent au moins un descripteur, dit virtuel, d'indenteurs virtuels de modélisation des indenteurs réels;
- on détermine la valeur d'interaction de chaque descripteur virtuel à partir d'une part, d'une loi d'interaction entre le pneumatique et le revêtement et, d'autre part, de chaque loi de variation des indenteurs virtuels, et
- on prévoit la valeur de l'effet physique d'interaction à partir de la valeur d'interaction d'au moins un descripteur virtuel.

La quantité de données à manipuler est moindre par rapport à un traitement numérique du même effet physique d'interaction qui conduirait à une quantité de données et un temps de calcul trop importants. En effet, pour chaque valeur du paramètre, les indenteurs virtuels sont tous identiques bien que les indenteurs réels qu'ils modélisent soient tous différents. Aussi, pour chaque valeur du paramètre, chaque indenteur réel est modélisé par un indenteur virtuel qui traduit une réalité physique de l'interaction entre le pneumatique et le revêtement, plutôt qu'une réalité géométrique comme dans l'état de la technique.

Selon des caractéristiques optionnelles du procédé :

- On détermine au moins une loi de variation d'au moins un descripteur virtuel, dit secondaire, en fonction d'au moins un des descripteurs virtuels, dit primaires.
- On détermine au moins une loi de variation d'au moins un descripteur, dit réel, des indenteurs réels, en fonction du paramètre, et on détermine, pour chaque valeur du paramètre, une valeur de chaque descripteur virtuel primaire à partir de chaque loi de variation de chaque descripteur réel et de chaque loi de variation de chaque descripteur virtuel secondaire.
- Les descripteurs réels et les descripteurs virtuels secondaires décrivent des grandeurs physiques analogues de l'interaction entre le pneumatique et respectivement les indenteurs réels et virtuels.

Avantageusement, les descripteurs réels comprennent :

○ une déformation réelle du pneumatique par les indenteurs réels, et
○ un volume indenté réel par les indenteurs réels dans le pneumatique, et les descripteurs virtuels secondaires comprennent :

○ une déformation virtuelle du pneumatique par les indenteurs virtuels, et
○ un volume indenté virtuel par les indenteurs virtuels dans le pneumatique.

Avantageusement, pour chaque valeur du paramètre variable, les indenteurs virtuels sont représentés par des sphères identiques.

Les indenteurs virtuels sphériques permettent de modéliser fidèlement le champ de contraintes générées par les indenteurs réels qui sont généralement arrondis sous l'effet de l'arasement provoqué par la circulation. En outre, les descripteurs virtuels des indenteurs virtuels sphériques sont faciles à calculer. Ces descripteurs comprennent notamment un volume de la sphère ou lenticulaire, un rayon de la sphère, etc...

Selon une caractéristique optionnelle du procédé selon l'invention, on prévoit le bruit de roulement du pneumatique sur le revêtement à partir d'une loi de prévision du bruit de roulement fonction d'une valeur d'interaction d'au moins un descripteur.

Chaque valeur d'interaction de chaque descripteur réel modélisant correctement l'interaction entre le pneumatique et le revêtement, on peut donc déterminer précisément et de façon quantitative le bruit de roulement du pneumatique sur le revêtement à partir de la loi de prévision du bruit.

Une telle loi de prévision est particulièrement avantageuse pour la conception du revêtement. En effet, au lieu de mesurer le bruit de roulement expérimentalement, par exemple au moyen de capteurs sonores, sur une chaussée revêtue du revêtement, on peut prévoir le bruit à partir d'un échantillon de la chaussée d'un ou quelques mètres seulement. On économise ainsi les coûts de construction de la chaussée et de l'expérience.

Le bruit de roulement d'un pneumatique donné, roulant dans des conditions données, dépend notamment de la rugosité du revêtement. Cette rugosité engendre des vibrations du pneumatique qui génèrent le bruit. Le revêtement présente également des caractéristiques d'absorption et de réflexion. Le bruit de roulement varie en fonction de ces caractéristiques. Le procédé selon l'invention, compte tenu de son approche physique de l'effet physique d'interaction, permet de séparer la contribution de chacune de ces caractéristiques et, pour le concepteur de route, permet de déterminer la ou les caractéristiques qui font qu'un revêtement est plus ou moins bruyant. Au contraire, une mesure de bruit est globale et ne permet pas de distinguer les mécanismes physiques à l'origine du bruit. La seule mesure ne donne pas le lien clair entre les caractéristiques et le bruit de roulement et ne permet pas de maîtriser la conception du revêtement.

Avantageusement, le descripteur est le nombre réel d'indenteurs réels par unité de surface du revêtement et la valeur d'interaction est la valeur maximale du nombre d'indenteurs réels par unité de surface du revêtement.

On a trouvé de manière surprenante qu'on pouvait prévoir correctement le bruit de roulement du pneumatique grâce à la valeur maximale du nombre d'indenteurs réels par unité de surface. En outre, on calcule le nombre d'indenteurs par unité de surface de revêtement facilement contrairement aux procédés de prévision du bruit de l'état de la technique dans lesquels on doit calculer nécessairement plusieurs dizaines de descripteurs.

Avantageusement, le descripteur est le rayon virtuel des sphères et la valeur d'interaction est la valeur d'interaction du rayon des sphères.

On a trouvé que la précision de la loi de prévision du bruit pouvait être améliorée en ajoutant la valeur d'interaction du rayon virtuel des sphères qui est une valeur pertinente pour prévoir précisément le bruit de roulement.

L'invention a également pour objet un programme d'ordinateur comprenant des instructions de code aptes à commander l'exécution des étapes du procédé tel que défini ci-dessus lorsqu'il est exécuté sur un ordinateur.

L'invention a aussi pour objet un support d'enregistrement de données comprenant, sous forme enregistrée, un programme tel que défini ci-dessus.

L'invention a également pour objet une mise à disposition d'un programme tel que défini ci-dessus sur un réseau de télécommunication en vue de son téléchargement.

L'invention a enfin pour objet un procédé de fabrication d'un revêtement comprenant une étape de prévision selon un procédé tel que défini ci-dessus.

L'invention sera mieux comprise à la lecture de la description qui va suivre, donnée uniquement à titre d'exemple non limitatif et faite en se référant aux dessins dans lesquels :

- la figure 1 représente un profil réel d'un revêtement de chaussée et un profil réel filtré du revêtement ;
- la figure 2 illustre une étape de découpage du profil réel en strates ;
- la figure 3 représente une loi de variation du nombre d'indenteurs réels du profil réel en fonction d'une cote z;
- la figure 4 illustre une étape de détermination de la déformation réelle du pneumatique par les indenteurs réels;
- la figure 5 illustre une étape de détermination du volume indenté réel par les indenteurs réels dans le pneumatique;
- la figure 6 illustre un profil virtuel obtenu par le procédé selon l'invention ;
- la figure 7 représente une interaction modélisée entre le pneumatique et le revêtement ;
- la figure 8 illustre une partie lenticulaire de sphère à laquelle on se réfère pour la détermination de la déformation virtuelle du pneumatique et du volume indenté virtuel par les indenteurs virtuels dans le pneumatique;
- les figures 9 et 10 représentent des lois de variation de descripteurs virtuels en fonction de la cote z.

Sur les figures, on a représenté des axes X, Y, Z orthogonaux entre eux correspondant aux orientations habituelles longitudinale (X), transversale (Y) et verticale (Z) d'une chaussée.

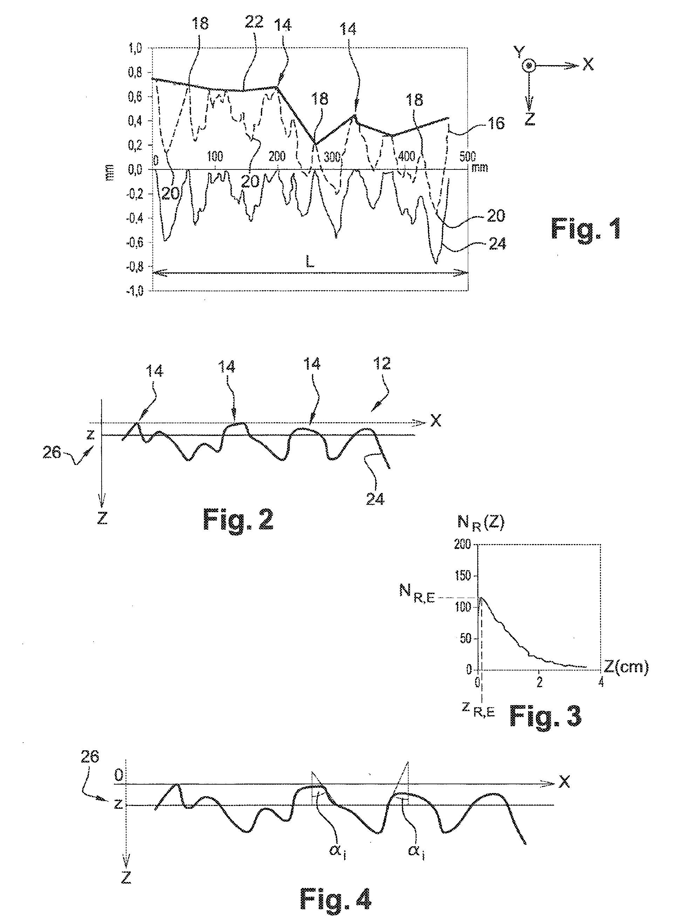

On a représenté sur les figures 1 et 2 un revêtement 12 de chaussée destiné à être en interaction avec un pneumatique. Le revêtement 12 comprend une matrice comprenant du goudron, du bitume et/ou du ciment dans laquelle sont incorporés des gravillons de tailles variées. Ces gravillons, appelés encore granulats, forment des indenteurs 14 à la surface du revêtement 12. Les indenteurs 14 sont destinés à être au contact du pneumatique.

On fabrique le revêtement 12 selon un procédé de prévision décrit ci-dessous.

On relève un profil 16, dit réel, en deux dimensions, d'un échantillon du revêtement 12, de préférence au moyen d'un profilomètre laser. En l'espèce, on mesure une profondeur du profil réel 16 sur une longueur L du revêtement. En acquérant un profil 16 en deux dimensions, on diminue le temps d'acquisition et le matériel à mettre en oeuvre par rapport au relevé d'un profil en trois dimensions. Le profil réel 16 est représenté sur la figure 1 dans un plan X, Z en traits pointillés et présente des crêtes 18 et des puits 20. On considère que chaque profil réel 16 représente une tranche d'épaisseur dy du revêtement.

En variante, on relève plusieurs profils 16 en deux dimensions afin de constituer un échantillon en trois dimensions.

On filtre le profil 16 au moyen d'un filtre 22 de coupure représenté par une ligne brisée sur la figure 1 et appelée ligne de crêtes. La ligne de crêtes 22 sélectionne et relie les crêtes 18 présentant une cote z telle qu'un pneumatique roulant sur le profil 16 rentre en contact uniquement avec les crêtes 22 sélectionnées. Enfin, on redresse le profil 16 en réinitialisant les cotes des crêtes 22 sélectionnées à la cote zéro. On obtient alors un profil 24 redressé représenté par une ligne continue sur la figure 1.

On a représenté sur la figure 2 le profil 24. On discrétise le profil 24 en fonction d'un paramètre variable du profil 24. En l'espèce, le paramètre variable est une cote z du profil 24. On découpe alors le profil 24 en plusieurs strates 26 selon l'axe Z, par exemple cent strates, correspondant chacune à une cote z. Les strates sont sensiblement planes et parallèles au plan X, Y.

On définit des descripteurs, dits réels, $N_R$, $\gamma_R$ et $V_R$ des indenteurs 14. L'indice R indique que ces descripteurs sont mesurés à partir du profil réel 24. On définit également un plan de coupe de cote z correspondant à un plan horizontal perpendiculaire à l'axe Z et s'étendant à la cote z. Pour chaque descripteur réel $N_R$, $\gamma_R$ et $V_R$, on va maintenant calculer une loi de variation en fonction du paramètre variable z.

En référence aux figures 2 et 3, $N_R$ représente le nombre d'indenteurs réels 14 par unité de surface. Pour chaque cote z, on calcule le nombre d'indenteurs 14 du profil 24 interceptés par chaque plan de coupe de cote z et par unité de surface. On détermine alors une loi de variation $N_R(z)$ en fonction du paramètre variable z. Puis, on détermine une valeur, dite d'interaction, $N_{R,E}$ à partir de la loi de variation $N_R(z)$. La valeur d'interaction $N_{R,E}$ est la valeur maximale du nombre d'indenteurs réels 14 par unité de surface du revêtement 12. Sur la figure 3, $N_{R,E} = 115$ indenteurs par $m^2$ pour $z_{R,E}=17$ mm.

Dans le cas d'un profil en trois dimensions, on détermine, pour chaque cote z, le nombre d'indenteurs réels 14 en contact avec le pneumatique. Pour une même tranche dy de revêtement, le nombre d'indenteurs réels 14 en contact avec le pneumatique varie si les crêtes 18 ne sont pas coplanaires dans la tranche dy considérée.

Dans le cas d'un profil en deux dimensions, on fait l'hypothèse selon laquelle la valeur maximale du nombre d'indenteurs réels 14 est la valeur réelle du nombre d'indenteurs réels 14 pour chaque cote z. En effet, un maximum local est généralement révélateur de la présence d'une crête 18 selon la direction transversale dans la tranche dy explorée.

En référence à la figure 4, $\gamma_R$ représente une déformation locale réelle du pneumatique par chaque indenteur 14. Pour chaque cote z, on calcule chaque déformation $\gamma_{z,i}$ définie par $\gamma_{z,i}$=cotan($\alpha_i$) où $\alpha_i$ est le demi-angle au sommet de chaque indenteur 14i présent à la cote z. Puis, pour chaque cote z, on calcule une valeur moyenne des déformations $\gamma_{z,i}$. On détermine ainsi une loi de variation $\gamma_R(z)$ en fonction du paramètre variable z.

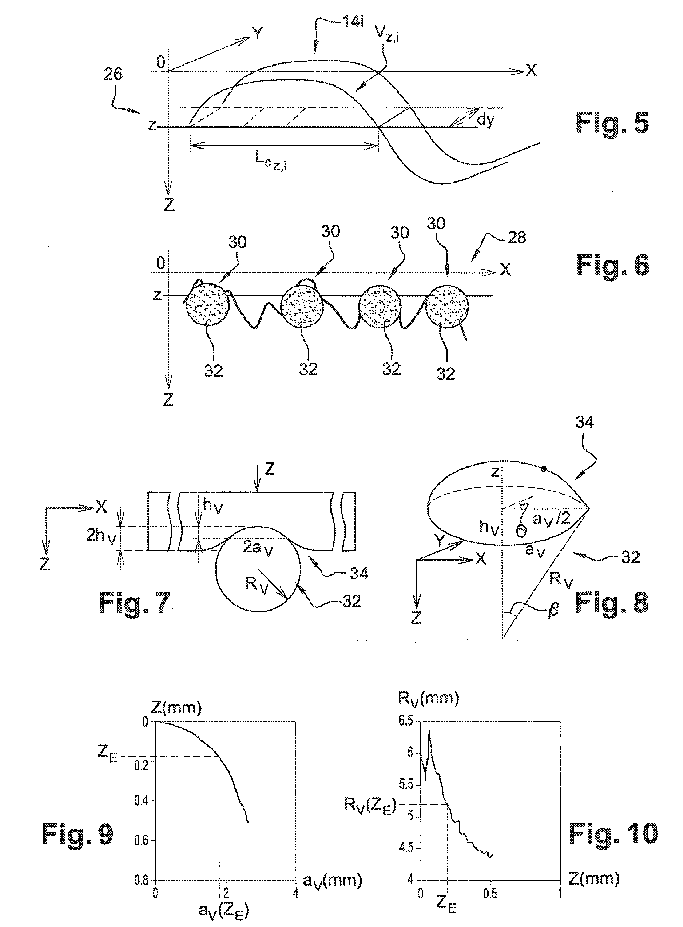

En référence à la figure 5, $V_R$ représente un volume indenté réel par unité de surface par les indenteurs réels 14 dans le pneumatique. Pour chaque cote z, on calcule chaque volume, $\Delta V_{z,i}$, indenté par chaque indenteur 14i à la cote z et défini par $\Delta V_{z,i} = L_{C_{z,i}}.h_{m,i}.dy$ où $Lc_{z,i}$ est une longueur de corde de chaque indenteur i à la cote z, $h_{m,i}$ est une hauteur moyenne de chaque indenteur 14i sur la longueur $Lc_{z,i}$. Puis, pour chaque cote z, on calcule $V_R(z)$ en additionnant les volumes $\Delta V_{z,i}(z)$. On détermine ainsi une loi de variation $V_R(z)$ en fonction du paramètre variable z définie par :

$$V_{R(Z)} = \frac{1}{L.dy}.\Sigma\Delta V_{z,i}$$ où L représente la longueur du profil 24.

On modélise le revêtement 12 par un profil virtuel 28 représenté à la figure 6. Le profil virtuel 28 comporte des indenteurs virtuels 30 de modélisation des indenteurs réels 14. On définit des descripteurs, dits virtuels, des indenteurs virtuels 30. Chaque descripteur virtuel varie en fonction du paramètre variable z selon une loi de variation.

Ces descripteurs virtuels comprennent des descripteurs virtuels primaires $a_v$, $R_v$, $h_v$ et des descripteurs virtuels secondaires $\gamma_V$, $V_V$. L'indice V indique que les descripteurs sont virtuels. Les descripteurs virtuels secondaires $\gamma_V$, $V_V$ et les descripteurs réels $\gamma_R$, $V_R$ décrivent des grandeurs physiques analogues de l'interaction entre le pneumatique et respectivement les indenteurs virtuels 30 et réels 14. On définit pour le profil virtuel 28, de façon analogue au profil réel 24, un plan de coupe de cote z correspondant à un plan horizontal perpendiculaire à l'axe Z et s'étendant à la cote z.

Les indenteurs virtuels 30 sont représentés par des sphères 32. En variante, les indenteurs virtuels 30 pourront être représentés par des cônes, des barreaux cylindriques ou d'autres formes adaptées au type de revêtement à modéliser et à l'effet physique d'interaction.

On a représenté sur la figure 7 une interaction entre le pneumatique et une sphère virtuelle 32 de rayon $R_v$. Pour une charge Z appliquée sur le pneumatique, la sphère 32 crée une indentation de profondeur $2h_v$ et comprend une partie 34 lenticulaire au contact avec le pneumatique de rayon maximal $a_v$ et de hauteur $h_v$. L'interaction entre le pneumatique et la sphère 32 répond à une loi d'interaction de Hertz :

$$a_v = \frac{3(1-v^2)Z.R_v}{4.E}$$

dans laquelle v et E sont respectivement le coefficient de Poisson et le module de rigidité de la gomme du pneumatique.

On a représenté sur la figure 8 la partie lenticulaire 34 d'une sphère 32 de rayon $R_v$. Pour chaque descripteur virtuel secondaire $\gamma_v$, $V_v$, on va maintenant calculer chaque loi de variation en fonction d'au moins un des descripteurs virtuels primaires $a_v$, $R_v$, $h_v$, ici en fonction de $a_v$ et $R_v$.

$\gamma_v$ représente une déformation virtuelle du pneumatique par chaque indenteur virtuel 30, ici par la partie hémisphérique 34. La déformation réelle est calculée à partir du profil 16 des indenteurs réels 14 en deux dimensions. La déformation virtuelle est calculée à partir des sphères 32 en trois dimensions. On considère donc que la déformation virtuelle correspond à une moyenne des déformations engendrées par chaque sphère 32 selon l'ensemble des plans X, Z passant par chaque sphère 32 comme si les sphères 32 étaient disposées au hasard le long du profil virtuel 28. Ainsi, à partir d'un profil réel en deux dimensions, le procédé permet de déterminer des descripteurs tridimensionnels du profil virtuel.

La déformation moyenne correspond, dans chaque plan de coupe X, Z, à la déformation imposée par le point à mi-contact, c'est-à-dire le point de coordonnées x=($a_v$.cos θ)/2, y=($a_v$. sin θ)/2. Une pente au point de mi-contact est donnée par la relation :

$$\frac{dz}{dx} = -\frac{a_v}{2}.\cos\theta.\left[R_v^2 - \frac{a_v^2}{4}.(1 - 3.\sin^2\theta)\right]^{-\frac{1}{2}}$$

Afin d'obtenir la déformation virtuelle du pneumatique $\gamma_V$ sur l'ensemble des plans de coupe X,Z, on calcule :

$$\gamma_{m,v} = \frac{2}{\pi}\int_0^{\pi/2} -\frac{a_v}{2}.\cos\theta.\left[R_v^2 - \frac{a_v^2}{4}.(1 - 3.\sin^2\theta)\right]^{-\frac{1}{2}} d\theta$$

On détermine ainsi une loi de variation $\gamma_V(z)$ en fonction de $a_v(z)$ et $R_v(z)$ et donc en fonction de z :

$$\gamma_{m,v}(z) = \frac{a_v}{\pi\left(R_v^2 - \frac{a_v^2}{4}\right)^{\frac{1}{2}}} + \frac{1}{8\pi}\left[\frac{a_v}{\left(R_v^2 - \frac{a_v^2}{4}\right)^{\frac{1}{2}}}\right]^3$$

$V_v$ représente un volume indenté virtuel par les indenteurs virtuels 30 dans le pneumatique, ici par la partie hémisphérique 34.

On détermine ainsi une loi de variation $V_v(z)$ en fonction de $a_v(z)$ et $R_v(z)$, et donc en fonction de z, de la façon suivante :

$$V_v(z) = \pi.R_v^3.\left(\frac{2}{3} + \frac{\cos^3\beta}{3} - \cos\beta\right) \text{ avec } \cos\beta = \frac{R_v - h_v}{a_v}$$

Puis, on détermine, pour chaque valeur du paramètre variable z, une valeur de chaque descripteur virtuel primaire $a_v(z)$, $R_v(z)$ à partir de chaque loi de variation de chaque descripteur réel $\gamma_R(z)$, $V_R(z)$ et de chaque loi de variation de chaque descripteur virtuel secondaire $\gamma_v(z)$, $V_v(z)$. En l'espèce, pour chaque valeur du paramètre variable z, on pose l'égalité entre, d'une part, le volume indenté réel $V_R(z)$ et le volume indenté virtuel $V_v(z)$ et, d'autre part, la déformation réelle $\gamma_R(z)$ et la déformation virtuelle $\gamma_v(z)$. On détermine ainsi une loi de variation de chaque descripteur virtuel primaire $a_v(z)$, $R_v(z)$ en fonction du paramètre variable z. On parle alors de modèle à déformation et volume imposés.

On notera que les sphères 32 virtuelles sont, pour chaque valeur du paramètre variable z, identiques et toutes décrites par les mêmes descripteurs primaires $a_v(z)$, $R_v(z)$.

On a représenté sur les figures 9A et 9B les lois de variation des descripteurs virtuels primaires respectivement $a_v(z)$ et $R_v(z)$ à déformation et volume imposés.

On détermine alors une valeur, dite d'interaction, du paramètre variable, ici une valeur d'interaction $z_E$ de la cote z, à partir d'une part, de la loi d'interaction de Hertz, pécisée ci-dessus, entre le pneumatique et le revêtement et, d'autre part, de chaque loi de variation des descripteurs virtuels primaires $a_v(z)$, $R_v(z)$. On résout numériquement le système formé par ces trois lois et on obtient, dans l'exemple représenté, $z_E=0.19$ mm. On détermine aussi pour chaque loi de variation, une valeur d'interaction de chaque descripteur $a_v(z)$, $R_v(z)$ à la valeur $z_E$ d'interaction. On obtient $a_v(z_E)$ =1,85 mm et $R_v(z_E)=5,14$ mm.

Puis, on prévoit un effet physique d'interaction entre le pneumatique et le revêtement. En l'espèce, on prévoit le bruit B de roulement du pneumatique sur le revêtement 12 à partir d'une loi de prévision du bruit B du type $B = g$ ($V_1, ..., V_n$) dans laquelle $V_1,...,V_n$ sont des valeurs de descripteurs $D_1,..., D_n$ du revêtement.

Dans le premier mode de réalisation, n=2, $D_1$ est un nombre d'indenteurs caractéristique du revêtement 12 et $D_2$ est une dimension d'indenteurs caractéristique du revêtement 12. Dans l'exemple illustré, le nombre d'indenteurs caractéristique est la valeur d'interaction $N_{R,E}$ du nombre d'indenteurs réels 12 par unité de surface du revêtement 12 et la dimension d'indenteurs caractéristique est la valeur d'interaction $R_v(z_E)$ du rayon des sphères virtuelles 32.

Dans ce mode de réalisation, on prévoit le bruit B à partir d'une loi de prévision du bruit B de roulement définie par :

$$B = 20 \log \left[ \left( \frac{R_v(z_E)}{Ro} \right)^{\frac{1}{5}} \left( \frac{No}{N_{R,E}} \right)^{\frac{3}{5}} \left( \frac{C}{Co} \right)^{k} \left( \frac{0.75}{1-v^2} \frac{E}{Eo} \right)^{\frac{1}{5}} \right] + Bo \qquad \text{(équation 1)}$$

dans laquelle C est la vitesse de roulement du pneumatique, v est le coefficient de Poisson de la gomme et E le module de rigidité de la gomme, Bo est un bruit de roulement de référence pour un pneumatique de référence de module de rigidité Eo roulant à la vitesse de référence Co sur un revêtement de référence de descripteurs virtuels de référence Ro et No. k appartient à l'intervalle [1,2-2]. De préférence, k=1,6. En variante, k=1,2. Dans une autre variante, k=2. Bo dépend de l'emplacement où est réalisé la mesure : à l'intérieur du véhicule portant le pneumatique, au bord d'une piste revêtue du revêtement...

Dans un second mode de réalisation, n, $D_1$ et $D_2$ sont identiques au premier mode de réalisation. On prévoit le bruit B à partir d'une loi de prévision du bruit B de roulement définie par :

$$B = 20 \log \left[ \left( \frac{R_v(z_E)}{Ro} \right)^{\frac{1}{5}} \left( \frac{No}{N_{R,E}} \right)^{\frac{3}{5}} \left( \frac{C}{Co} \right)^{k} \right] + Bo' \qquad \text{(équation 2)}$$

Lorsque l'on utilise un pneumatique de référence pour comparer plusieurs revêtements différents, les module de rigidité E et coefficient de Poisson v de la gomme sont connus et sont compris dans la constante de référence Bo'. k appartient à l'intervalle [1,2-2]. De préférence, k=1,6. En variante, k=1,2. Dans une autre variante, k=2.

Dans un troisième mode de réalisation, compte tenu de l'influence négligeable du descripteur $R_v$ par rapport aux autres descripteurs pour certains types de revêtements, on prévoit le bruit B de roulement d'un pneumatique donné à partir d'une loi de prévision du bruit B de roulement définie par :

$$B = 20 \log \left[ \left( \frac{No}{N_{R,E}} \right)^{\frac{3}{5}} \left( \frac{C}{Co} \right)^{k} \right] + Bo'' \qquad \text{(équation 3)}$$

Dans ce mode de réalisation n=1 et $D_1$, le nombre d'indenteurs caractéristique du revêtement, est le seul descripteur utilisé. k appartient à l'intervalle [1,2-2]. De préférence, k=1,6. En variante, k=1,2. Dans une autre variante, k=2. On observe généralement des écarts faibles entre les bruits B prévus par les équations 2 et 3.

Dans un quatrième mode de réalisation, on prévoit le bruit B de roulement d'un pneumatique quelconque à partir d'une loi de prévision du bruit B de roulement définie par:

$$B = 20 \log \left[ \left( \frac{No}{N_{R,E}} \right)^{\frac{3}{5}} \left( \frac{C}{Co} \right)^{k} \left( \frac{0.75}{1-v^2} \frac{E}{Eo} \right)^{\frac{1}{5}} \right] + Bo''' \qquad \text{(équation 4)}$$

Dans ce mode de réalisation n=1 et $D_1$, le nombre d'indenteurs caractéristique du revêtement, est le seul descripteur utilisé. k appartient à l'intervalle [1,2-2]. De préférence, k=1,6. En variante, k=1,2. Dans une autre variante, k=2.

Dans un cinquième mode de réalisation, on prévoit le bruit B de roulement d'une pneumatique donné à partir d'une loi de prévision du bruit de roulement B définie par:

$$B = 20\log\left[\left(\frac{R_v(z_E)}{Ro}\right)^{\frac{1}{5}}\left(\frac{No}{N_{R,E}}\right)^{\frac{3}{5}}\right] + Bo''''\qquad\text{(équation 5)}$$

Cette relation permet d'obtenir une bonne prévision en ne tenant compte que des caractéristiques du revêtement. En effet, la loi tient compte de $R_v(z_E)$ qui, bien que présentant un poids mathématique plus faible que $N_{R,E}$, permet de décrire indirectement des caractéristiques du procédé de fabrication du revêtement telles que la nature de la roche, l'influence du mode de concassage. Cette relation permet également de comprendre comment une modification des caractéristiques du procédé de fabrication du revêtement modifie le bruit de roulement.

### Exemple de prévision du bruit B de roulement pour un pneumatique sculpté donné.

On a effectué des essais avec un pneumatique sculpté sur différents revêtements T1-T4. Les descripteurs $N_{R,E}$ et $R_v(z_E)$ pour chacun de ces revêtements ont été déterminés selon le procédé selon l'invention. On acquiert le profil réel d'un échantillon de 1 m de chaque revêtement T1-T4 au moyen d'un profilomètre laser dont les résolutions spatiales sont dx = 0,1 mm selon l'axe X et dz = 0.01 mm selon l'axe Z. On utilise la loi de prévision du second mode de réalisation (équation 2) avec pour valeur Bo'=45 dB. Cette valeur de Bo' correspond à une moyenne expérimentale généralement mesurée pour un pneumatique de tourisme lorsqu'on se situe à l'extérieur du véhicule.
On fait rouler un véhicule donné à 60 km/h sur chaque revêtement T1-T4. On mesure alors le bruit à trois emplacements différents: à proximité du pneumatique, à l'intérieur du véhicule et à l'extérieur du véhicule au passage de ce dernier (appelé aussi *coast-by noise* en anglais). Les résultats sont donnés dans le tableau 1 ci-dessous.

Tableau 1

| Revêtement | $N_{R,E}$ (indenteurs/m$^2$) | $R_v(z_E)$ (mm) | B prévu par l'équation 2 (dB) | B mesuré à proximité du pneu (dB) | B mesuré à l'extérieur du véhicule (dB) | B mesuré à l'intérieur du véhicule (dB) |
|---|---|---|---|---|---|---|
| T1 | 4131 | 3,6 | 71,8 | 103,5 | 69,2 | 66,6 |
| T2 | 6911 | 4,8 | 69,6 | 103,5 | 66,6 | 63,7 |
| T3 | 19509 | 7,51 | 65,0 | 102 | 61,8 | 59,3 |
| T4 | 28233 | 3,74 | 61,9 | 95,7 | 55,4 | 56,3 |

Pour le bruit mesuré à proximité du pneu, on obtient la corrélation suivante $B_{mesuré} = 0{,}73.B_{prévu} + 52$ avec un coefficient de corrélation $R^2=0{,}8$.
Pour le bruit mesuré à l'extérieur du véhicule, on obtient la corrélation suivante $B_{mesuré} = 1{,}26.B_{prevu} - 21{,}40$ avec un coefficient de corrélation $R^2=0{,}96$.
Pour le bruit mesuré à l'intérieur du véhicule, on obtient la corrélation suivante $B_{mesuré} = 1{,}23.Bp_{révu} - 22{,}10$ avec un coefficient de corrélation $R^2=0{,}97$.
On note que la valeur expérimentale $B_{mesuré}$ peut être approchée de façon plus précise en corrigeant la valeur de Bo' en fonction l'emplacement de mesure.
Quel que soit l'emplacement de mesure, la corrélation entre le modèle de prévision et les mesures effectuées est très satisfaisante et permet de comparer et prévoir, à partir d'échantillon d'un ou plusieurs revêtements, le bruit B issu du roulement d'un pneumatique donné.

### Exemple de prévision du bruit B de roulement pour un pneumatique lisse donné.

Afin de caractériser la rugosité de la route sans interaction avec la sculpture du pneumatique, on utilise un pneumatique lisse. On effectue des essais sur différents revêtements R1-R6 illustrant la diversité des revêtements du réseau routier. Les descripteurs $N_{R,E}$ et $R_v(z_E)$ pour chacun de ces revêtements ont été déterminés selon le procédé selon l'invention. On acquiert le profil réel d'un échantillon de 1,7 m d'un revêtement donné au moyen d'un profilomètre laser dont les résolutions spatiales sont dx = 0.4 mm selon l'axe X et dz = 0,01 mm selon l'axe Z. On utilise les lois de prévision des deuxième et troisième modes de réalisation (équations 2 et 3) avec pour valeur Bo'= Bo''=45 dB.
On fait rouler un véhicule donné à 60 km/h sur chaque revêtement R1-R6. On réalise plusieurs mesures expérimentales du bruit à proximité du pneumatique et on fait une moyenne des mesures expérimentales pour chaque revêtement R1-R6. Les résultats sont donnés dans le tableau 2 ci-dessous.

Tableau 2

| Revêtements | $N_{R.E}$ (indenteurs/m$^2$) | $R_v(z_E)$ (mm) | B mesuré (dB) | B prévu selon l'équation 2 (dB) | B prévu selon l'équation 3 (dB) |
|---|---|---|---|---|---|
| R1 | 27128 | 6,1 | 84,9 | 82,9 | 83,8 |
| R2 | 18021 | 4,74 | 85,4 | 84,6 | 85,9 |
| R3 | 15028 | 4,66 | 86,9 | 85,6 | 86,9 |
| R4 | 19884 | 8,66 | 86,0 | 85,2 | 85,4 |
| R5 | 13922 | 5,77 | 87,1 | 86,3 | 87,3 |
| R6 | 5751 | 3,40 | 92,1 | 90,0 | 91,9 |

D'une part, on note que la prévision du bruit B de roulement pour l'ensemble des revêtements R1-R6, est excellente ce qui confirme la pertinence des descripteurs choisis mais également la justesse de la loi de prévision du bruit B de roulement pour des revêtements très différents.

D'autre part, on note que la valeur du bruit B prévu au moyen de la loi selon le troisième mode de réalisation est supérieure à la valeur du bruit B prévu au moyen de la loi selon le deuxième mode de réalisation. Dans le cadre de cet exemple, la loi selon le troisième mode de réalisation permet d'obtenir des valeurs de bruit B prévues plus proches des valeurs expérimentales que la loi selon le deuxième mode de réalisation.

Enfin, on note que la précision du bruit B prévu est supérieure à celle de l'exemple précédent.

Tout ou partie du procédé selon l'invention pourra être mis en oeuvre par le biais d'instructions de code aptes à commander l'exécution des étapes du procédé lorsqu'il est exécuté sur un ordinateur. Les instructions pourront émaner de programmes d'ordinateur enregistrés sur un support d'enregistrement de données par exemple du type à disque dur ou à mémoire flash, CD ou DVD. On pourra prévoir de mettre un tel programme à disposition en vue de son téléchargement sur un réseau de télécommunication tel que le réseau Internet ou un réseau sans fil. Des mises à jour du programme pourront ainsi être envoyées par ce réseau aux ordinateurs connectés au réseau.

**Revendications**

1. Procédé de prévision d'au moins un effet physique d'interaction entre un pneumatique et un revêtement (12), **caractérisé en ce que :**

   - on relève un profil réel (16) du revêtement (12),
   - on découpe le profil réel (16) en plusieurs strates, chaque strate correspondant à une cote (z) du profil réel (16),
   - on détermine au moins une loi ($a_v(z)$, $R_v(z)$, $N_R(z)$) de variation d'au moins un descripteur ($a_v$, $R_v$, $N_R$) du revêtement (12) à partir du profil réel (16), en fonction de la cote (z) du profil réel (16),
   - on détermine, pour chaque loi ($a_v(z)$, $R_v(z)$, $N_R(z)$) de variation, une valeur ($a_v(z_E)$, $R_v(z_E)$, $N_{R,E}$), dite d'interaction, de chaque descripteur ($a_v$, $R_v$, $N_R$) à une valeur ($z_{R,E}$, $z_E$), dite d'interaction, de la cote (z), et
   - on prévoit une valeur (B) de l'effet physique d'interaction à partir d'une valeur d'interaction ($R_v(z_E)$, $N_{R,E}$) d'au moins un descripteur ($R_v$, $N_R$).

2. Procédé selon la revendication 1, dans lequel :

   - le ou les descripteurs ($a_v$, $R_v$, $N_R$) comprennent au moins un descripteur ($a_v$, $R_v$), dit virtuel, d'indenteurs virtuels (24) de modélisation d'indenteurs réels (14) du revêtement (12) ;
   - on détermine la valeur d'interaction ($a_v(z_E)$, $R_v(z_E)$) de chaque descripteur virtuel ($a_v$, $R_v$) à partir d'une part, d'une loi d'interaction entre le pneumatique et le revêtement (12) et, d'autre part, de chaque loi ($a_v(z)$, $R_v(z)$) de variation des indenteurs virtuels (24), et
   - on prévoit la valeur (B) de l'effet physique d'interaction à partir de la valeur d'interaction ($R_v(z_E)$) d'au moins un descripteur virtuel ($R_v$).

3. Procédé selon la revendication 2, dans lequel on détermine au moins une loi de variation d'au moins un descripteur

virtuel ($\gamma_v(z)$, $V_v(z)$), dit secondaire, en fonction d'au moins un des descripteurs virtuels ($a_v$, $R_v$), dit primaires.

4.  Procédé selon la revendication 3, dans lequel, on détermine au moins une loi de variation d'au moins un descripteur ($\gamma_R$, $V_R$), dit réel, des indenteurs réels (14), en fonction du paramètre (z), et on détermine, pour chaque valeur du paramètre (z), une valeur de chaque descripteur virtuel primaire ($a_v$, $R_v$) à partir de chaque loi ($\gamma_R(z)$, $V_R(z)$) de variation de chaque descripteur réel ($\gamma_R$, $V_R$) et de chaque loi ($\gamma_v(z)$, $V_v(z)$) de variation de chaque descripteur virtuel secondaire ($\gamma_v$, $V_v$).

5.  Procédé selon la revendication 4, dans lequel les descripteurs réels ($\gamma_R$, $V_R$) et les descripteurs virtuels secondaires ($\gamma_v$, $V_v$) décrivent des grandeurs physiques analogues de l'interaction entre le pneumatique et respectivement les indenteurs réels (14) et virtuels (24).

6.  Procédé selon la revendication 4 ou 5, dans lequel :

    - les descripteurs réels comprennent :

        ○ une déformation réelle ($\gamma_R$) du pneumatique par les indenteurs réels, et
        ○ un volume indenté réel ($V_R$) par les indenteurs réels dans le pneumatique

    - les descripteurs virtuels secondaires comprennent :

        ○ une déformation virtuelle ($\gamma_v$) du pneumatique par les indenteurs virtuels, et
        ○ un volume indenté virtuel ($V_v$) par les indenteurs virtuels dans le pneumatique.

7.  Procédé selon l'une quelconque des revendications 2 à 6, dans lequel, pour chaque valeur du paramètre variable (z), les indenteurs virtuels (30) sont représentés par des sphères identiques (32).

8.  Procédé selon l'une quelconque des revendications précédentes, dans lequel, on prévoit le bruit (B) de roulement du pneumatique sur le revêtement (12) à partir d'une loi de prévision du bruit (B) de roulement fonction d'une valeur d'interaction ($N_{R,E}$, $R_v(z_E)$) d'au moins un descripteur ($N_R$, $R_v$).

9.  Procédé selon la revendication 8, dans lequel le descripteur est le nombre réel d'indenteurs réels par unité de surface du revêtement ($N_R$) et la valeur d'interaction ($N_{R,E}$) est la valeur maximale du nombre d'indenteurs réels par unité de surface du revêtement (12).

10. Procédé selon la revendication 8 ou 9, dans lequel le descripteur est le rayon ($R_v$) virtuel des sphères (32) et la valeur d'interaction ($R_v(z_E)$) est la valeur d'interaction du rayon des sphères (32).

11. Programme d'ordinateur, **caractérisé en ce qu'**il comprend des instructions de code aptes à commander l'exécution des étapes du procédé selon l'une quelconque des revendications précédentes lorsqu'il est exécuté sur un ordinateur.

12. Support d'enregistrement de données comprenant, sous forme enregistrée, un programme selon la revendication 11.

13. Mise à disposition d'un programme selon la revendication 11 sur un réseau de télécommunication en vue de son téléchargement.

14. Procédé de fabrication d'un revêtement, **caractérisé en ce qu'**il comprend une étape de prévision selon un procédé selon l'une quelconque des revendications 1 à 10.


**Patentansprüche**

1.  Verfahren zum Vorhersagen wenigstens einer physikalischen Wechselwirkung zwischen einem Luftreifen und einem Belag (12), **dadurch gekennzeichnet, dass:**

    - ein reales Profil (16) des Belags (12) ermittelt wird,
    - das reale Profil (16) in mehrere Schichten zerschnitten wird, wobei jede Schicht einer Maßzahl (z) des realen Profils (16) entspricht,
- wenigstens ein Gesetz ($a_v(z)$, $R_v(z)$, $N_R(z)$) der Veränderung wenigstens eines Deskriptors ($a_v$, $R_v$, $N_R$) des Belags (12) anhand des realen Profils (16) als Funktion der Maßzahl (z) des realen Profils (16) bestimmt wird,
- für jedes Veränderungsgesetz ($a_v(z)$, $R_v(z)$, $N_R(z)$) ein so genannter Wechselwirkungswert ($a_v(z_E)$, $R_v(z_E)$, $N_{R,E}$) jedes Deskriptors ($a_v$, $R_v$, $N_R$) mit einem so genannten Wechselwirkungswert ($z_{R,E}$, $z_E$) der Maßzahl (z) bestimmt wird, und
- ein Wert (B) der physikalischen Wechselwirkung anhand eines Wechselwirkungswerts ($R_v(z_E)$, $N_{R,E}$) des wenigstens einen Deskriptors ($R_v$, $N_R$) bereitgestellt wird.

2. Verfahren nach Anspruch 1, wobei:

- der oder die Deskriptoren ($a_v$, $R_v$, $N_R$) wenigstens einen virtuellen Deskriptor ($a_v$, $R_v$) virtueller Eindringelemente (24) für die Modellierung realer Eindringelemente (14) des Belags (12) umfassen;
- der Wechselwirkungswert ($a_v(z_E)$, $R_v(z_E)$) jedes virtuellen Deskriptors ($a_v$, $R_v$) einerseits anhand eines Wechselwirkungsgesetzes zwischen dem Luftreifen und dem Belag (12) und andererseits anhand jedes Veränderungsgesetzes ($a_v(z)$, $R_v(z)$) der virtuellen Eindringelemente (24) bestimmt wird und
- der Wert (B) der physikalischen Wechselwirkung anhand des Wechselwirkungswertes ($R_v(z_E)$) wenigstens eines virtuellen Deskriptors ($R_v$) bereitgestellt wird.

3. Verfahren nach Anspruch 2, wobei wenigstens ein Veränderungsgesetz wenigstens eines so genannten sekundären virtuellen Deskriptors ($y_v(z)$, $V_v(z)$) als Funktion wenigstens eines der so genannten primären virtuellen Deskriptoren ($a_v$, $R_v$) bestimmt wird.

4. Verfahren nach Anspruch 3, wobei wenigstens ein Veränderungsgesetz wenigstens eines so genannten realen Deskriptors ($y_R$, $V_R$) der virtuellen Eindringelemente (14) als Funktion des Parameters (z) bestimmt wird und für jeden Wert des Parameters (z) ein Wert jedes primären virtuellen Deskriptors ($a_v$, $R_v$) anhand jedes Veränderungsgesetzes ($y_R(z)$, $V_R(z)$) jedes realen Deskriptors ($y_R$, $V_R$) und jedes Veränderungsgesetzes ($y_v(z)$, $V_v(z)$) jedes sekundären virtuellen Deskriptors ($y_v$, $V_v$) bestimmt wird.

5. Verfahren nach Anspruch 4, wobei die realen Deskriptoren ($y_R$, $V_R$) und die sekundären virtuellen Deskriptoren ($y_v$, $V_v$) analoge physikalische Größen der Wechselwirkung zwischen dem Luftreifen und den realen Eindringelementen (14) bzw. den virtuellen Eindringelementen (24) beschreiben.

6. Verfahren nach Anspruch 4 oder 5, wobei:

- die realen Deskriptoren Folgendes umfassen:

○ eine reale Verformung ($y_R$) des Luftreifens durch die realen Eindringkörper und
○ ein reales Eindringvolumen ($V_R$) durch die realen Eindringelemente in dem Luftreifen, und

- die sekundären virtuellen Deskriptoren Folgendes umfassen:

○ eine virtuelle Verformung ($y_v$) des Luftreifens durch die virtuellen Eindringelemente und
○ ein virtuelles Eindringvolumen ($V_v$) durch die virtuellen Eindringelemente in dem Luftreifen.

7. Verfahren nach einem der Ansprüche 2 bis 6, wobei für jeden Wert des variablen Parameters (z) die virtuellen Eindringelemente (30) durch identische Kugeln (32) repräsentiert werden.

8. Verfahren nach einem der vorhergehenden Ansprüche, wobei das Abrollgeräusch (B) des Luftreifens auf dem Belag (12) anhand eines Bereitstellungsgesetzes für das Abrollgeräusch (B) als Funktion eines Wechselwirkungswerts ($N_{R,E}$, $R_v(z_E)$) wenigstens eines Deskriptors ($N_R$, $R_v$) bereitgestellt wird.

9. Verfahren nach Anspruch 8, wobei der Deskriptor die reale Anzahl von realen Eindringelementen pro Oberflächeneinheit des Belags ($N_R$) ist und der Wechselwirkungswert ($N_{R,E}$) der maximale Wert der Anzahl realer Eindringelemente pro Oberflächeneinheit des Belags (12) ist.

10. Verfahren nach Anspruch 8 oder 9, wobei der Deskriptor der virtuelle Radius ($R_v$) der Kugeln (32) ist und der Wechselwirkungswert ($R_v(z_E)$) der Wechselwirkungswert des Radius der Kugeln (32) ist.

**11.** Computerprogramm, **dadurch gekennzeichnet, dass** es Codebefehle umfasst, die dafür ausgelegt sind, die Ausführung der Schritte des Verfahrens nach einem der vorhergehenden Ansprüche zu steuern, wenn es auf einem Computer ausgeführt wird.

**12.** Datenaufzeichnungsträger, der in aufgezeichneter Form ein Programm nach Anspruch 11 enthält.

**13.** Bereitstellen eines Programms nach Anspruch 11 in einem Telekommunikationsnetz, um es fernzuladen.

**14.** Verfahren zum Herstellen einer Belag, **dadurch gekennzeichnet, dass** es einen Schritt des Vorhersagens gemäß einem Verfahren nach einem der Ansprüche 1 bis 10 enthält.

**Claims**

**1.** Method for predicting at least one physical interaction effect between a tyre and a pavement (12), **characterized in that:**

- a real profile (16) of the pavement (12) is charted,
- the real profile (16) is sectioned into several strata, each stratum corresponding to an altitude (z) of the real profile (16),
- at least one law ($a_v(z)$, $R_v(z)$, $N_R(z)$) of variation of at least one descriptor ($a_v$, $R_v$, $N_R$) of the pavement (12) is determined on the basis of the real profile (16), as a function of the altitude (z) of the real profile (16),
- a so-called interaction value ($a_v(z_E)$, $R_v(z_E)$, $N_{R,E}$) of each descriptor ($a_v$, $R_v$, $N_R$) is determined at a so-called interaction value ($z_{R,E}$, $z_E$) of the altitude (z), for each law ($a_v(z)$, $R_v(z)$, $N_R(z)$) of variation, and
- a value (B) of the physical interaction effect is predicted on the basis of an interaction value ($R_v(z_E)$, $N_{R,E}$) of at least one descriptor ($R_v$, $N_R$).

**2.** Method according to Claim 1, in which:

- the descriptor or descriptors ($a_v$, $R_v$, $N_R$) comprise at least one so-called virtual descriptor ($a_v$, $R_v$) of virtual indenters (24) for modelling real indenters (14) of the pavement (12);
- the interaction value ($a_v(z_E)$, $R_v(z_E)$) of each virtual descriptor ($a_v$, $R_v$) is determined on the basis, on the one hand, of a law of interaction between the tyre and the pavement (12) and, on the other hand, of each law ($a_v(z)$, $R_v(z)$) of variation of the virtual indenters (24), and
- the value (B) of the physical interaction effect is predicted on the basis of the interaction value ($R_v(z_E)$) of at least one virtual descriptor ($R_v$).

**3.** Method according to Claim 2, in which at least one law of variation of at least one so-called secondary virtual descriptor ($\gamma_v(z)$, $V_v(z)$) is determined as a function of at least one of the so-called primary virtual descriptors ($a_v$, $R_v$).

**4.** Method according to Claim 3, in which at least one law of variation of at least one so-called real descriptor ($\gamma_R$, $V_R$) of the real indenters (14) is determined as a function of the parameter (z), and a value of each primary virtual descriptor ($a_v$, $R_v$) is determined for each value of the parameter (z) on the basis of each law of variation ($\gamma_R(z)$, $V_R(z)$) of each real descriptor ($\gamma_R$, $V_R$) and of each law of variation ($\gamma_v(z)$, $V_v(z)$) of each secondary virtual descriptor ($\gamma_v$, $V_v$).

**5.** Method according to Claim 4, in which the real descriptors ($\gamma_R$, $V_R$) and the secondary virtual descriptors ($\gamma_v$, $V_v$) describe analogous physical quantities of the interaction between the tyre and respectively the real indenters (14) and virtual indenters (24).

**6.** Method according to Claim 4 or 5, in which:

- the real descriptors comprise:

○ a real deformation ($\gamma_R$) of the tyre by the real indenters, and
○ a real volume ($V_R$) indented by the real indenters in the tyre,

- the secondary virtual descriptors comprise:

○ a virtual deformation ($\gamma_v$) of the tyre by the virtual indenters, and
○ a virtual volume ($V_v$) indented by the virtual indenters in the tyre.

**7.** Method according to any one of Claims 2 to 6, in which, for each value of the variable parameter (z), the virtual indenters (30) are represented by identical spheres (32).

**8.** Method according to any one of the preceding claims, in which the rolling noise (B) of the tyre on the pavement (12) is predicted on the basis of a law for predicting the rolling noise (B) as a function of an interaction value ($N_{R,E}$, $R_v(z_E)$) of at least one descriptor ($N_R$, $R_v$).

**9.** Method according to Claim 8, in which the descriptor is the real number of real indenters per unit area of the pavement ($N_R$) and the interaction value ($N_{R,E}$) is the maximum value of the number of real indenters per unit area of the pavement (12).

**10.** Method according to Claim 8 or 9, in which the descriptor is the virtual radius ($R_v$) of the spheres (32) and the interaction value ($R_v(z_E)$) is the interaction value of the radius of the spheres (32).

**11.** Computer program, **characterized in that** it comprises code instructions able to control the execution of the steps of the method according to any one of the preceding claims when it is executed on a computer.

**12.** Medium for recording data comprising, in recorded form, a program according to Claim 11.

**13.** Making available of a program according to Claim 11 on a telecommunication network with a view to its downloading.

**14.** Method for manufacturing a pavement, **characterized in that** it comprises a prediction step according to a method according to any one of Claims 1 to 10.

**Fig. 1**

**Fig. 2**

**Fig. 3**

**Fig. 4**

Fig. 5

Fig. 6

Fig. 7

Fig. 8

Fig. 9

Fig. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HEINRICH GERT.** *WEAR,* 2008, vol. 265, 1052-1060